# EUROPEAN PATENT SPECIFICATION

(11) **EP 3 644 207 B1**
(45) Date of publication and mention of the grant of the patent: **30.09.2020**
(21) Application number: 18201909.1
(22) Date of filing: 23.10.2018
(51) Int. Cl.: G06F 21/64, H04L 29/06

(54) **SECURE ELEMENT, SECURITY MODULE, TRUSTED SENSOR NODE, AND METHOD FOR CERTIFYING A PLAUSIBILITY OF A SENSOR VALUE**
SICHERES ELEMENT, SICHERHEITSMODUL, ZUVERLÄSSIGER SENSORKNOTEN UND VERFAHREN ZUR ZERTIFIZIERUNG EINER PLAUSIBILITÄT EINES SENSORWERTS
ÉLÉMENT SÉCURISÉ, MODULE DE SÉCURITÉ, NOEUD DE CAPTEUR FIABLE ET PROCÉDÉ PERMETTANT DE CERTIFIER UNE VRAISEMBLANCE D'UNE VALEUR DE CAPTEUR

(43) Date of publication of application: 29.04.2020
(73) Proprietor: Siemens Aktiengesellschaft, 80333 München (DE)
(72) Inventor: Aschauer, Hans, 81829 München (DE); Falk, Rainer, 85586 Poing (DE); Feist, Christian Peter, 80689 München (DE); Schneider, Daniel, 80796 München (DE)

(56) References cited:
- WO-A1-2016/058802
- US-A1- 2011 320 823
- US-A1- 2014 352 396

## Description

The present invention relates to the field of industrial sensor networks, and more particular to a secure element, a trusted sensor node and a method for providing a cryptographic record certifying a plausibility of a sensor value.

In an industrial network, physical measurands such as temperature, pressure, flow rate and the like are measured by sensors. A respective sensor may provide an acquired sensor value indicative of a respective measurand to a sensor node. The sensor node may provide the acquired sensor value in the industrial network via network communication such as via Ethernet, Profinet, Profibus and the like. The sensor node may protect the transmitted sensor value using a cryptographic record such as a digital signature and the like. A recipient node may only accept and process the transmitted sensor value if the digital signature is valid.

EP 2 471 243 B1 teaches a method for transmitting data values in a sensor network, wherein at least one cryptographically protected value range message is provided, which is valid for a particular time span and comprises at least bounds for valid transmitted data values.

WO 2016/058802 A1 discloses an interface system and method of interfacing to generate data compatible with an external system in an oil and gas asset supply chain. More particularly, a gateway interface includes a computer which communicates with industrial control systems, a business rules engine which correlates, secures, authenticates, filters, reconciles, provides unforgeability and creates key value data; and interfaces that interface with external systems. Yet more particularly, the gateway may compare measurement data with that from other nearby sensors measuring similar or related physical phenomena to make sure they are coherent. It is also conceived to add, to a sensor, an electronic system or mechanism that protects it from tampering. The gateway may further have the capability to authenticate data being received before securing the data.

US 2011/0320823 A1 discloses an architecture that provides trusted sensors and trusted sensor readings on computing devices such as mobile devices. The architecture utilizes a trustworthy computing technology (e.g., trusted platform module (TPM).

However, known techniques such as the cryptographic digital signature only protect the sensor value during transmission from the sensor node to the recipient node. The digital signature generated by the sensor node cannot provide trust in the correctness of the sensor value itself. For example, the sensor may be located at a place in an industrial facility that is remote from the sensor node and/or difficult to reach. Accordingly, it may be difficult to provide a line connecting the sensor with the sensor node with tamper protection, and thus, the sensor node may digital sign acquired sensor values that have been tampered with. Still further, a software component executed on the sensor node may be compromised and may manipulate the acquired sensor node before it becomes protected by the digital signature.

Accordingly, there is a need for improved techniques for providing a trusted sensor value in an industrial sensor network. The invention is set out in the appended claims.

According to a first aspect, there is provided a secure element comprising a first entity configured to securely store a number of cryptographic keys; a second entity configured to acquire a trusted sensor value indicative of a measurand; and a third entity configured to create, based on the acquired trusted sensor value, and using at least one of the number of cryptographic keys, a cryptographic record adapted to certify a level of plausibility of a lesser-trusted sensor value acquired by a requestor external to the secure element and indicative of the measurand, and to provide the cryptographic record to the requestor.

The expression "requestor" may describe an entity, such as a sensor node of an industrial network, that uses a conventional technique to acquire a sensor value, termed "lesser-trusted sensor value" herein, and requests, from the secure element, the cryptographic record adapted to certify that the lesser-trusted sensor value is within the plausibility range.

When the lesser-trusted sensor value is provided to a receiving node in an industrial network along with the cryptographic record created by the secure element, a level of trust in the sensor value may be suitably adjusted to the certified level of plausibility of the lesser-trusted sensor value. Thereby, a level of trust in sensor values provided within an industrial network may be advantageously improved.

That is, based on the level of plausibility certified by the cryptographic record, a receiving node in the industrial network may determine that the sensor value has substantially not been tampered with neither during transmission from the requestor to the receiving node, nor during acquisition, nor while being processed by the requestor.

Herein, the expression "has substantially not been tampered with" may mean, in particular, that any possible undetected tampering may be limited to an amount that corresponds to the certified level of plausibility. Herein, a high certified level of plausibility may correspond to a smaller amount of undetected tampering, and vice versa.

The expression "external", with regards to the requestor being external to the secure element, may mean, in particular, that the secure element is part of a secure domain that is distinct from a lesser-secure domain of which the requestor is part. In other words, it may be possible to identify a physical or logical boundary between the secure domain and the lesser-secure domain. However, the expression "external" shall not be construed to exclude a case in which the secure element and the requestor may be integrated into one single PCB, system-on-chip, processor or the like, as long as it is possible to identify the physical or logical boundary between the two domains.

The "secure element" is particularly referred to as "secure" to indicate that processing carried out by the secure element is less likely to be subject to successful tampering than processing carried out by the requestor. For example, the secure element may be provided with an additional level of physical or logical tamper protection.

More particularly, the secure element may be a separate hardware-based security module, may be an integrated secure element of a System-on-Chip, or may be embodied as a Trusted Execution Environment, Hardware Crypto Engine, Security Guard Extensions, integrated Trusted Platform Module, and the like.

Likewise, in particular, the expression "trusted sensor value" indicates a sensor value that is less likely to be subject to successful tampering than the "lesser-trusted sensor value".

For example, the trusted sensor value may be a sensor value acquired from a trusted sensor. The trusted sensor may be integral to the secure element. Alternatively, the trusted sensor value may be acquired from an external trusted sensor that is provided with physical tamper protection and/or is connected to the secure element with tamper-protected wiring.

The tamper protection may make it difficult to acquire the trusted sensor value with an accuracy that is as high as the accuracy of the lesser-trusted sensor value. That is, a precision, time resolution, image resolution, color depth, dynamic range, sampling rate and the like of the trusted sensor value may be limited by the tamper protection.

That is, the lesser-trusted sensor value may be an indication of the measurand that is more accurate, but less trusted than the trusted sensor value. Conversely, the trusted sensor value may be a more trusted, but less accurate indication of the measurand than the lesser-trusted sensor value.

In particular, the lesser-trusted sensor value and the trusted sensor value are values that are acquired independently of each other and are indicative of the same measurand.

The "measurand" may relate to any physical quantity to be measured, such as temperature, pressure, brightness, flow rate, image and/or object recognition readings, such as light, ultrasonic, radar and/or lidar readings, a chemical analysis result, a pH value and the like.

The expression "securely store" may mean that that at least a portion of each of the number of cryptographic keys may be protected against access by an entity external to the secure element, and or that use of a respective of the number of cryptographic keys by the secure element and/or an entity external to the secure element may only be released for a specific, well-defined purpose.

A "number" shall mean a number of one or more.

A "level of plausibility" may be a parameter that is determinable by a comparison between the trusted sensor value with the lesser-trusted sensor value. More specifically, a number of plausibility determination parameters may be derivable from the trusted-sensor value. Examples of the plausibility determination parameters include the trusted sensor value itself, a measurement uncertainty of the trusted sensor value, an expected or allowable percental or absolute deviation from the trusted sensor value, a trusted range of plausible values of the measurement, and the like. The "level of plausibility" may be determinable by assessing the lesser-trusted sensor value using the number of plausibility determination parameters.

It is specifically noted that there is no need for the secure element to actually determine the level of plausibility, as will be explained below.

That is, the cryptographic record being "adapted to certify a level of plausibility of the lesser-trusted sensor value" may have one of the following three meanings:
a) The secure element may acquire the lesser-trusted sensor value, compare the lesser-trusted sensor value to the trusted sensor value to determine the level of plausibility of the lesser-trusted sensor value, and may provide the cryptographic record only if the determined level of plausibility is at or above a predetermined threshold. In this variant, existence of the cryptographic record in association with the lesser-trusted sensor value constitutes a certification that level of plausibility of the lesser-trusted sensor value determined by the secure element is at or above the predetermined threshold.
b) The secure element may acquire the lesser-trusted sensor value, compare the lesser-trusted sensor value to the trusted sensor value indicative of the same measurand to determine the level of plausibility of the lesser-trusted sensor value, and may provide the cryptographic record as a cryptographic record including information about the determined level of plausibility. In this variant, the cryptographic record conveys information certifying the determined level of plausibility to an external entity, such as a receiving node in an industrial network, which is provided with the lesser-trusted sensor value and the cryptographic record.
c) The secure element may not need to acquire the lesser-trusted sensor value. Rather, the secure element may determine, based on the trusted sensor value, the plausibility determination parameters and include the plausibility determination parameters into the cryptographic record. In this variant, an external entity, such as a receiving node in an industrial network, which is provided with the lesser-trusted sensor value and the cryptographic record, may use the plausibility determination parameters included in the cryptographic record to determine the level of plausibility based on the lesser-trusted sensor value and the plausibility determination parameters included in the cryptographic record. That is, in this variant, the cryptographic record conveys plausibility determination parameters adapted to certify (adapted to be used by an external entity for certifying) the level of plausibility.

According to an embodiment, the secure element further comprises a fourth entity configured to acquire, from the requestor, the lesser-trusted sensor value. The third entity is configured to determine the level of plausibility of the acquired lesser-trusted sensor value based on the trusted sensor value; and to create the cryptographic record under the condition that the determined level of plausibility is at or above a predetermined threshold.

In the present embodiment, the level of plausibility is determined by the third entity of the secure element. A way of determining the level of plausibility may be advantageously tailored to match implementation details of the secure element, such as a known level of measurement uncertainty of the trusted sensor, and the like. A receiving node that is provided with the lesser-trusted sensor value and the cryptographic record may merely verify the cryptographic record to gain trust in the lesser-trusted sensor value and is relieved from the burden of assessing a level of plausibility thereof.

According to a further embodiment, the cryptographic record is a digital signature of the lesser-trusted sensor value created by the third entity using a first cryptographic key of the number of cryptographic keys.

Thereby, a receiving node that receives the lesser-trusted sensor value and the cryptographic record, which is the digital signature, may perform a cryptographic operation to verify the digital signature. If the digital signature is verified to be a valid digital signature of the lesser-trusted sensor value, the receiving node may trust that the lesser-trusted sensor value has been regarded by the secure element as having a sufficient level of plausibility.

Herein it is noted that the receiving node may be enabled to verify the digital signature by being in a trust relationship with the first cryptographic key stored in the first entity of the secure element and used by the third entity of the secure element to create the digital signature.

For example, the first cryptographic key may be a symmetric cryptographic key and may be shared by the receiving node and the secure element.

The third entity is configured to: determine, based on the trusted sensor value, a plurality of plausibility determination parameters enabling a determination of the level of plausibility of the lesser-trusted sensor value; and include the determined plurality of plausibility determination parameters into the cryptographic record.

That is, a cryptographic record including the plausibility determination parameters may be provided to the requestor. The determination of the level of plausibility of the lesser-trusted sensor value may be performed by an external entity, such as a receiving node of an industrial network, that is provided with the cryptographic record and the lesser-trusted sensor value and thereby enabled to perform the determination.

Thus, the secure element does not need to be provided with functionality to acquire the lesser-trusted sensor value and to determine the level of plausibility of the lesser-trusted sensor, thereby simplifying the structure and reducing a processing load of the secure element.

In particular, the cryptographic record may be provided independently of whether and when the lesser-trusted sensor value is actually acquired. For example, the cryptographic record including the plausibility determination parameters may be created and provided to the requestor upon request, periodically, whenever a trusted sensor value is acquired and/or whenever the acquired trusted sensor value changes by more than a predetermined threshold.

Especially in a case where the lesser-trusted sensor value is acquired more frequently than the trusted sensor value, a load placed on the secure element by creating the cryptographic record may be reduced.

The cryptographic record is a digital certificate that is created by the third entity using a second cryptographic key of the number of cryptographic keys and certifies a first cryptographic key of the number of cryptographic keys.

In particular, that first cryptographic key of the number of cryptographic keys may be used - either by the secure element or by the requestor, as will be detailed in the further embodiments hereinbelow - to create a digital signature of the lesser-trusted sensor value.

In particular, the digital certificate that certifies the first cryptographic key may be a digital certificate that enables an external entity, such as a receiving node of an industrial network, that is provided with the lesser-trusted sensor value, the digital signature and the digital certificate, to verify whether the digital signature is a valid digital signature of the lesser-trusted sensor value. In particular, the external entity may use the digital certificate to verify whether the digital signature has been created by a rightful owner of the first cryptographic key. To this end, it is noted that the external entity may be in a trust relationship with the second cryptographic key.

The digital certificate may include a public portion of the first cryptographic key, the validity criterion, and a digital signature of the public portion of the first cryptographic key and a validity criterion. The digital signature may be created using a private portion of the second cryptographic key. Herein, the trust relationship between the external entity and the second cryptographic key may be implemented by storing and trusting a copy of a public portion of the second cryptographic key on the external entity.

In particular, the digital certificate may include the plurality of plausibility determination parameters as part of the validity criterion.

Thereby, advantageously, the external entity may verify that the digital signature is a valid digital signature if the lesser-trusted sensor value digitally signed by the digital signature is determined to be plausible (to have a level of plausibility higher than a predetermined threshold) based on the plausibility determination parameters included in the digital certificate. If the lesser-trusted sensor value is determined to be implausible (to have a level of plausibility lower than the predetermined threshold), the external entity may not verify the digital signature and may not trust in the implausible lesser-trusted sensor value.

Thereby, even if the lesser-trusted sensor value is provided along with a digital signature thereof, the receiving node may, advantageously, detect that the lesser-trusted sensor value may have been tampered with, if the lesser-trusted sensor value is determined not to be plausible based on the validity criterion included in the digital certificate.

According to a further embodiment, the secure element comprises a fourth entity configured to acquire, from the requestor, the lesser-trusted sensor value. The third entity of the secure element is configured to create a digital signature of the lesser-trusted sensor value using the first cryptographic key of the number of cryptographic keys, and to provide the digital signature to the requestor.

It is noted that in one variant of the present embodiment, the third entity may determine the level of plausibility of the acquired lesser-trusted sensor value based on the trusted sensor value and may only create the digital signature under the condition that the determined level of plausibility is at or above a predetermined threshold.

However, in another variant of the present embodiment, the third entity may digitally sign the acquired lesser-trusted sensor value using the first cryptographic key without determining and/or verifying a level of plausibility of the lesser-trusted sensor value. In this case, the digital signature may merely be used to secure the lesser-trusted sensor value in transit between the requestor and the external entity. However, the digital signature may not certify a level of plausibility of the lesser-trusted sensor value. Rather, it is the digital certificate that is the cryptographic record that enables, at the external entity, certification of the level of plausibility of the lesser-trusted sensor value.

Specifically, since the third entity of the secure element creates the digital signature, there is no need to release the first cryptographic key beyond the secure element. Out of the number of cryptographic keys securely stored in the first entity of the secure element, the only piece of information ever released beyond the secure element may be a public portion of the second cryptographic key. Therefore, advantageously, a level of security may be high.

According to a further embodiment, the first entity is configured to provide at least a private portion of the first cryptographic key to the requestor.

In the present embodiment, the secure element may be implemented without having the fourth entity and without the third entity being configured to create a digital signature. Rather, a processing power of the requestor may be beneficially leveraged for creating a respective digital signature of a respective lesser-trusted sensor value using the private portion of the first cryptographic key.

Even though the requestor may be compromised, security can be maintained by using the digital certificate, which is provided by the secure element. That is, based on the digital certificate, an external entity verifies a digital signature that has been created, using the first cryptographic, by the requestor. Since the digital certificate includes the plausibility determination parameters, it may advantageously allow the external entity to detect a case in which a compromised requestor has abused the first cryptographic key to digitally sign a lesser-trusted sensor value that has been tampered with.

According to a further embodiment, each of the number of cryptographic keys comprises a symmetric cryptographic key.

Herein, the cryptographic record may be a Message Authentication Code or Message Integrity Code created using, for example, AES with CBCMAC, SHA256 with HMAC, and the like.

Using symmetric keys may enable faster computations and may simplify setup of the industrial network especially if the number of receiving nodes is small.

According to a further embodiment, each of the number of cryptographic keys comprises an asymmetric cryptographic key pair having a private portion and a corresponding public portion.

That is, the cryptographic key may be also be referred to as an "asymmetric cryptographic key pair", wherein the private portion may be referred to as a "private key" and the public portion may be referred to as a "public key".

Using a respective asymmetric cryptographic key pair may increase security by enabling the private keys to be securely stored in the secure element without ever being released beyond the secure element.

According to a further embodiment, the plurality of plausibility determination parameters includes a trusted value range determined based on the acquired trusted sensor value and an allowable time range based on an acquisition time of the trusted sensor value.

By including the allowable time range into the plurality of plausibility determination parameters of the digital certificate, timeliness of a comparison of the lesser-trusted sensor value with the trusted sensor value (or the plurality of plausibility determination parameters based thereon) may be ensured.

It is noted that the present embodiment may also be described as the digital certificate having a limited validity period that is based on the acquisition time of the trusted sensor values, and a limited value range that is based on the value of the trusted sensor value.

Thereby, the digital certificate may only be used to verify a digital signature of a lesser-trusted sensor value that is within the trusted value range and has been acquired during the allowable time range.

A width of the trusted value range and a width of the allowable time range may be predetermined or may be set by the third entity, based on predetermined or machine-learned knowledge about properties of the trusted sensor from which the trusted sensor value is acquired.

According to a further embodiment, the secure element is provided with a logical and/or a physical tamper protection.

As an example of a logical tamper protection, the secure element may be implemented, at least partly, in software executed in a Trusted Execution Environment such as an ARM TrustZone.

A physical tamper protection may be an encapsulation in epoxy resin, a protective coating, a tamper-protecting film or the like.

According to a second aspect, a security module is provided comprising the above-mentioned secure element, an internal trusted sensor configured to measure the measurand to obtain a sensor reading and/or a port for connecting an external trusted sensor to obtain the sensor reading from the external trusted sensor; and a converter unit configured to convert the obtained sensor reading into the trusted sensor value. An area of the security module including the secure element, the converter unit and the trusted sensor and/or the port is provided with a physical tamper protection.

That is, advantageously, the physical tamper protection, such as the epoxy resin encapsulation, the protective coating, the tamper-protecting film or the like may protect all structural elements that are involved in creating the cryptographic record as well as in measuring, converting, acquiring and processing the trusted sensor value.

The converter unit may be an analog-to-digital converter.

The area including the secure element, the converter unit and the trusted sensor node and/or the port may be an area on a printed circuit board, a system-on-chip or the like.

According to an embodiment, the security module is provided with a connector for being pluggable into a corresponding connector of an industrial computing node so as to enable the industrial computing node to request the cryptographic record provided by the third entity of the secure element.

That is, an existing industrial computing node, such as a sensor node, may be equipped with the proposed pluggable security module and may thereby be upgraded with functionality to provide the cryptographic record adapted to certify a level of plausibility of a respective (lesser-trusted) sensor value provided by the sensor node.

According to a third aspect, a trusted sensor node for providing a sensor value within an industrial network is provided. The trusted sensor node comprises: an industrial computing node and the above-mentioned secure element and/or the above-mentioned security module. The industrial computing node is configured to: acquire, from a sensor, the lesser-trusted sensor value; request, from the secure element, the cryptographic record certifying the level of plausibility of the lesser-trusted sensor value; and provide the acquired lesser-trusted sensor value and the requested cryptographic record within the industrial network.

The sensor from which the industrial computing node acquires the lesser-trusted sensor value may be internal or external to the trusted sensor node.

The trusted sensor node may include a converter, such as an analog-to-digital converter, configured to obtain a sensor reading from the sensor and to convert the sensor reading into the lesser-trusted sensor value.

The trusted sensor node may provide the acquired lesser-trusted sensor value and the requested cryptographic record within the industrial network by transmitting to at least one further node of the industrial network on request and/or in periodic intervals and/or by publishing in a distributed database system, such as a blockchain and the like, being hosted by the industrial network.

According to a further embodiment, in the trusted sensor node, the secure element is embedded in a secure area of a processing unit of the industrial computing node.

For example, the secure element may be implemented, at least partly, in software executed in a Trusted Execution Environment of the processing unit of the industrial computing node included in the trusted sensor node.

The respective entity, e.g. the first, second, third and/or fourth entity, may be implemented in hardware and/or in software. If said entity is implemented in hardware, it may be embodied as a device, e.g. as a computer, as a processor or as a part of a system, e.g. a computer system or a system-on-chip. If said entity is implemented in software, it may be embodied as a computer program product, as a function, as a routine, as a program code or as an executable object.

Any embodiment of the first aspect may be combined with any embodiment of the first aspect to obtain another embodiment of the first aspect.

According to a fourth aspect, there is provided a method for providing a cryptographic record certifying a plausibility of a lesser-trusted sensor value. The method comprises using a secure element for performing the steps of: securely storing a number of cryptographic keys in the secure element; acquiring, by the secure element, a trusted sensor value indicative of a measurand; and creating, by the secure element, based on the acquired trusted sensor value and using at least one of the number of cryptographic keys, a cryptographic record adapted to certify a level of plausibility of a lesser-trusted sensor value, the lesser-trusted sensor value being acquired by a requestor external to the secure element and indicative of the measurand, and to provide the cryptographic record to the requestor. Said creating of the cryptographic record comprises: determining, based on the trusted sensor value, a plurality of plausibility determination parameters enabling a determination of the level of plausibility of the lesser-trusted sensor value; and including the determined plurality of plausibility determination parameters into the cryptographic record. Herein, the cryptographic record is a digital certificate that is created by the third entity using a second cryptographic key of the number of cryptographic keys and certifies a first cryptographic key of the number of cryptographic keys.

The embodiments and features described with reference to the secure element of the present invention apply mutatis mutandis to the method of the present invention.

According to a fifth aspect, the invention relates to a computer program product comprising a program code for executing the above-described method for providing a cryptographic record certifying a validity of a lesser-rusted sensor value when run on at least one computer.

The computer may be an industrial computing node such as a sensor node of an industrial network.

An advantage of the secure element, security module, trusted sensor node and method according to the first to fourth aspect and/or their various embodiments may be described as follows:
Through combined use of cryptography, such as digital signatures and certificates, with tamper protection, such as resin encapsulation, Trusted Computing and the like, a level of trust in sensor values provided in an industrial network may be increased.

Herein, any possible adverse effect of the tamper protection on the accuracy of a trusted sensor value that is acquired in a tamper-protected manner may be mitigated by adopting a plausibility comparison approach. In particular, a higher-accuracy, but lesser-trusted sensor value that has been acquired without tamper protection is provided to the industrial network as an actual indication of a measurand, and likewise, a cryptographic record that is adapted to certify a level of plausibility of the lesser-trusted sensor value is created based on the trusted sensor value and is likewise provided to the industrial network.

The cryptographic record may constitute a certification that the lesser-trusted sensor value has been determined to have a sufficient level of plausibility and/or may constitute a cryptographic record than may be used by a receiving node in the industrial network to determine the level of plausibility of the lesser-trusted sensor value.

In this way, plausibility information that is based on a securely acquired trusted sensor value may be provided and may be protected by a continuous, uninterrupted chain of trust, which may be implemented through tamper protection and cryptography and may lead all the way through from the point of acquisition of an indication of the measurement at the trusted sensor up to the receiving node that receives the cryptographic record.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic diagram of a secure element and a requestor according to a first exemplary embodiment;
Fig. 2 shows steps of a method for providing a cryptographic record according to the first exemplary embodiment;
Fig. 3 shows a use case of the secure element according to various exemplary embodiments;
Fig. 4 shows a schematic diagram of a secure element and a requestor according to a second exemplary embodiment;
Fig. 5 shows a schematic diagram of a secure element and a requestor according to a third exemplary embodiment;
Fig. 6 shows a schematic diagram of a secure element and a requestor according to a fourth exemplary embodiment;
Fig. 7 shows a schematic diagram of a pluggable security module according to a fifth exemplary embodiment; and
Fig. 8 shows a schematic diagram of a trusted sensor node according to a sixth exemplary embodiment.

In the Figures, like reference numerals designate like or functionally equivalent elements, unless otherwise indicated.

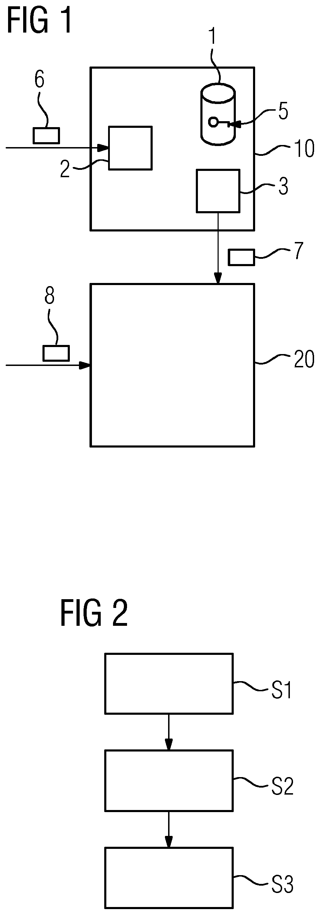

Fig. 1 shows a schematic diagram of a secure element 10 and a requestor 20, and Fig. 2 shows steps of a method for providing a cryptographic record 7 according to the first exemplary embodiment. Reference will be made to Fig. 1 and Fig. 2 in conjunction.

The secure element 10 of Fig. 1 comprises a first entity 1. In step S1 of the method of Fig. 2, a number of cryptographic keys 5 is securely stored in the first entity 1.

The secure element 10 of Fig. 1 further comprises a second entity 2. In step S2 of the method of Fig. 2, the second entity 2 acquires a trusted sensor value 6. The trusted sensor value 6 is indicative of a measurand.

The secure element 10 of Fig. 1 further comprises a third entity 3. In step S3 of the method of Fig. 2, the third entity 3
uses at least one of the number of cryptographic keys 5 to create a cryptographic record 7. The cryptographic record 7 is based on the acquired trusted sensor value 6 and is adapted to certify a level of plausibility of a lesser-trusted sensor value 8 that has been, is and/or will be acquired by the requestor 20 and is indicative of the same measurand as the trusted sensor value 6. Further, in step S3, the third entity 3 provides the cryptographic record 7 to the requestor 20.

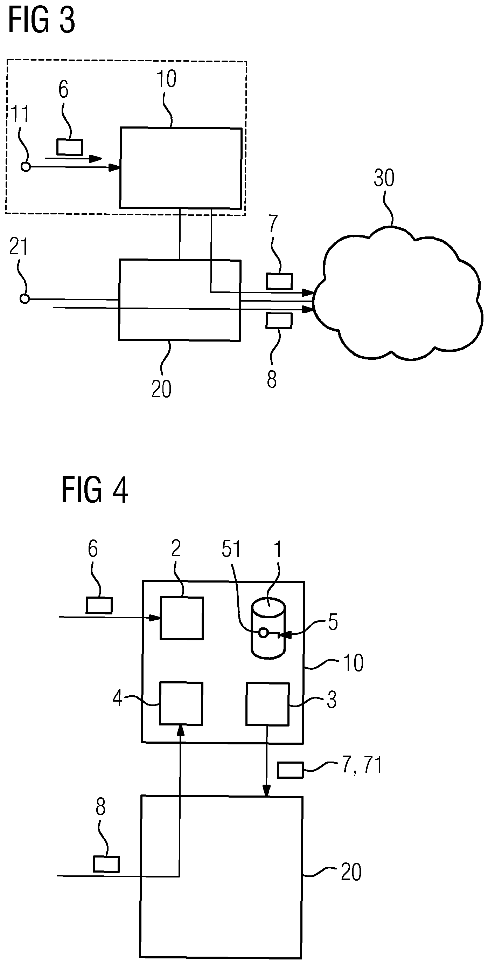

The benefits and the mode of operation of the above-described secure element 10 of the first exemplary embodiment will become more apparent from Fig. 3. Fig. 3 shows an exemplary use case of the secure element 10 according to any one of the first and/or the further exemplary embodiments described herein.

In the exemplary use case, the requestor is a sensor node 20 that is connected to a sensor 21. The sensor 21 is configured to measure, in an industrial facility (not shown), a measurand such as a temperature, pressure, flow rate and the like. The sensor node 20 acquires a signal indicative of the measured measurand from the sensor 21, determines a sensor value based on the acquired signal, and provides the sensor value 8, which is indicative of the measurand, within an industrial network 30.

In order to achieve high precision, the sensor 21 may be located at a precise position within the industrial facility where the measurement can be measured with high precision. Therefore, a line length of a line connecting the sensor 21 with the sensor node 20 may be long. Therefore, there is a risk that the signal indicative of the measurand may be tampered with before it reaches the sensor node 20. Also, software executed on the sensor node 20 may be compromised and may be abused to tamper with the sensor value 8. Therefore, the sensor value 8 is termed "lesser-trusted sensor value 8".

The secure element 10 is connected to a trusted sensor 11. The secure element 10, the trusted sensor 11 and the line connecting the secure element 10 and the trusted sensor 11 are provided with tamper protection, such as a cast resin encapsulation, which is indicated schematically by a dashed line.

The secure element 10 (second entity 2 thereof, Fig. 1) acquires the trusted sensor value 6 from the trusted sensor 11. The trusted sensor value 6 is indicative of the same measurand as the lesser-trusted sensor value 8. However, due to the tamper protection, the trusted sensor value 6 may be less precise than the lesser-trusted sensor value 8. For example, the resin encapsulation may alter, to a certain degree, a signal measured by the trusted sensor 11. Also, it may not be possible to locate the trusted sensor 11 at a location that is as close to a location where the measurand is to be measured as a location where the lesser-trusted sensor 12 is located.

For this reason, the trusted sensor value 6 in isolation may be of limited use to a receiving node (note shown) of the industrial network 30 due to lack of precision. However, the trusted sensor value 6 may be used advantageously to verify a plausibility and trustworthiness of the higher-precision, but lesser-trusted sensor value 8.

Based on the trusted sensor value 6, the secure element 10 (third entity 3 in Fig. 1) creates the cryptographic record 7 that is adapted to certify a level of plausibility of the lesser-trusted sensor value 8 and provides the cryptographic record 7 to the sensor node 20.

The sensor node 20 provides the cryptographic record 7 and the lesser-trusted sensor value 8 within the industrial network 30.

A receiving node (not shown) in the industrial network 30 may verify the cryptographic record 7 to determine the certified level of plausibility of the lesser-trusted sensor value 8.

Thereby, a level of trust of the industrial network 30 in the lesser-trusted sensor value 8 may be advantageously increased.

That is, a receiving node (not shown) in the industrial network 30 may advantageously use the cryptographic record 7 to verify that the lesser-trusted sensor value 8 has substantially not been tampered with neither during acquisition by the sensor 11, nor during transmission from the sensor 11 to the sensor node 20, nor during processing by the sensor node 20, nor during transmission from the sensor node 20 to the industrial network 30.

In a first variant, the lesser-trusted sensor value 8 may be provided to the secure element 10, the secure element 10 may determine the level of plausibility of the lesser-trusted sensor value 8 through comparison with the trusted sensor value 6, and the secure element 10 may provide the cryptographic record 7 to the requestor 20 only if the determined level of plausibility of the lesser-trusted sensor value 8 is at or above a predetermined threshold. That is, a verification of whether the lesser-trusted sensor value 8 is sufficiently plausibility may be performed by the third entity 3 (Fig. 1) of the secure element 10 prior to creating and/or providing the cryptographic record 7.

However, in a second variant, there is no need for the lesser-trusted sensor value 8 to be provided to the secure element 10. The cryptographic record 7 may be created within the secure element 10 being unaware of the lesser-trusted sensor value 8. In this variant, the cryptographic record 7 may include a number of plausibility determination parameters, and a receiving node (not shown) of the industrial network 30 that receives the cryptographic record 7 and the lesser-trusted sensor value 8 may use the plausibility determination parameters included in the cryptographic record 7 to determine a level of plausibility of the lesser-trusted sensor value 8.

Both variants will be explained in further detail in connection with the further exemplary embodiments of the secure element 10 described below.

Fig. 4 shows a schematic diagram of a secure element 10 and a requestor 20 according to a second exemplary embodiment. The second exemplary embodiment is based on the first variant of the first exemplary embodiment and a description of common features is omitted.

According to the second exemplary embodiment, the secure element 10 comprises a fourth entity 4 that is configured to receive the lesser-trusted sensor value 8 from the sensor node (requestor) 20. When the fourth entity 4 receives the lesser-trusted sensor value 8, the third entity 4 determines a level of plausibility of the lesser-trusted sensor value 8 by comparing the lesser-trusted sensor value 8 with the trusted sensor value 6. Only if the determined level of plausibility of the lesser-trusted sensor value 8 is at or above a predetermined threshold, the third entity 3 uses a first cryptographic key 51 stored in the first entity 1 to digitally sign the lesser-trusted sensor value 8. Thereby, a digital signature 71 is obtained. The digital signature 71 is provided to the sensor node 20 as the cryptographic record 7 certifying that the level of plausibility of the lesser-trusted sensor value 8 has been deemed to be sufficient.

Symmetric or asymmetric cryptography may be used to create the digital signature 71. Correspondingly, the first cryptographic key 61 may be a symmetric key, such as a cipher, or an asymmetric public-private cryptographic key pair.

A receiving node (not shown) of the industrial network 30 (Fig. 3) that receives the lesser-trusted sensor value 8 and the digital signature 71 may perform cryptographic operations to verify whether the digital signature 71 is a valid digital signature of the lesser-trusted sensor value 8. If yes, the receiving node may trust that the lesser-trusted sensor value 8 has substantially not been tampered with.

That is, according to the present embodiment, the digital signature 71 is the cryptographic record 7 that is adapted to certify the level of plausibility of the lesser-trusted sensor value 8.

It is noted that, in order to be able to verify the digital signature 71, the receiving node may be in a trust relationship with the cryptographic key 51 stored in the first entity 1 of the secure element 10. If the cryptographic key 51 is a symmetric cryptographic key, the trust relationship may entail an identical copy of the cryptographic key 51 being stored on the receiving node. If the cryptographic key 51 is an asymmetric cryptographic key pair, the trust relationship may entail a public portion (public key) of the asymmetric cryptographic key pair 51 being stored on the receiving node.

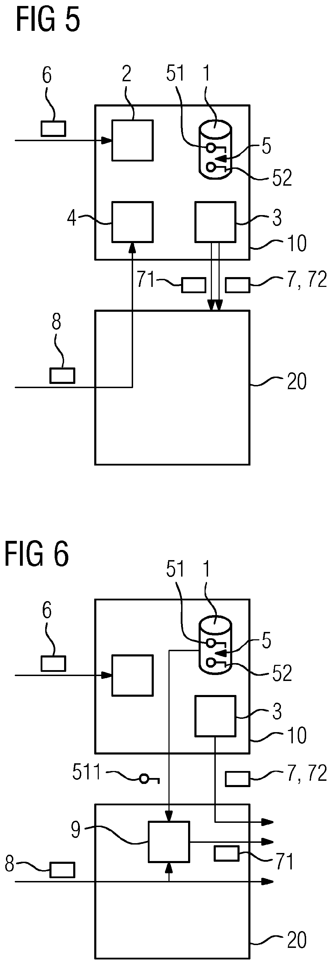

Fig. 5 shows a schematic diagram of a secure element 10 and a requestor 20 according to a third exemplary embodiment. The third exemplary embodiment is based on the second variant of the first exemplary embodiment and a description of common features is omitted.

According to the third exemplary embodiment, the plurality of cryptographic keys 5 stored in the first entity 1 of the secure element 10 comprises a first asymmetric cryptographic key pair 51 and a second asymmetric cryptographic key pair 52.

The secure element 10 of the third exemplary embodiment comprises a fourth entity 4 that is configured to receive the lesser-trusted sensor value 8 from the sensor node (requestor) 20 and digitally sign the lesser-trusted sensor value 8 using a private portion (private key) of the first asymmetric cryptographic key 51 to obtain the digital signature 71 of the lesser-trusted sensor value 8.

In the third exemplary embodiment, the digital signature 71 may be used by the requestor 20 to protect the lesser-trusted sensor value 8 during transmission from the requestor 20 to the industrial network 30.

However, the digital signature 71 may be created without the third entity 3 determining a level of plausibility of the acquired lesser-trusted sensor value 8. In this case, the digital signature 71 does not constitute a cryptographic record adapted to certify a level of plausibility of the lesser-trusted sensor value 8.

According to the third exemplary embodiment, the third entity 3 is further configured to use a private portion (private key) of the second asymmetric cryptographic key pair 52 to create a digital certificate 72 of the first asymmetric cryptographic key pair 51.

Specifically, the digital certificate 72 may be a data structure which comprises a copy of a public portion (public key) of the first asymmetric key pair 51, a validity criterion, and a digital signature created using a private portion (private key) of the second asymmetric key pair 52.

The validity criterion may include a number of plausibility determination parameters determined by the third entity 3 based on the acquired trusted sensor value 6.

The plausibility determination parameters may include one or more of: the trusted sensor value 6, a measurement uncertainty of the trusted sensor value 6, a drift or variation in time of the trusted sensor value 6 (of a series of previously acquired trusted sensor values), a lower bound and an upper bound of a trusted range of values considered to be plausible values of the measurand based on the trusted sensor value 6, a start point and an end point of a time range that includes an acquisition time at which the trusted sensor value 6 has been acquired, and the like. Herein, a width of the trusted value range and/or a width of the allowable time range may be determined by the third entity 3 in consideration of a measurement uncertainty associated with the trusted sensor value 6 that is due to the tamper protection, location of the trusted sensor 11, implementation details of the trusted sensor 11 and the like.

The validity criterion may specify that a digital signature of a lesser-trusted sensor value 8 created using the private key of the first asymmetric cryptographic key pair 51 is only to be considered valid if a level of plausibility of the digitally signed lesser-trusted sensor value 8 that is determinable using the plausibility determination parameters included in the validity criterion is at or above a predetermined threshold, and/or that the digital signature is only be trusted with a trust level that corresponds to the level of plausibility.

According to the third exemplary embodiment, it is the digital certificate 72 that is provided to the sensor node 20 that is the cryptographic record 7 adapted to certify the level of plausibility of the lesser-trusted sensor value 8.

The sensor node 20 provides to the industrial network 30 the acquired lesser-trusted sensor value 8, the digital signature 71 obtained from the secure element 10, and the digital certificate 72 obtained from the secure element 10.

It is noted that the above-mentioned features of the element 10 may be described as the secure element 10 embodying a Certification Authority that is configured to provide a digital certificate 72 of the first cryptographic key 51, wherein the digital certificate 72 is tied to a validity criterion that comprises plausibility determination parameters that are determined based on the trusted sensor value 6.

A receiving node (not shown) may receive the lesser-trusted sensor value 8, the digital signature 71 and the digital certificate 72. The receiving node may be in a trust relationship with the Certification Authority implemented by the secure element 10. That is, the receiving node may store and trust a copy of the public portion (public key) of the second asymmetric key pair 52 that is stored in the first entity 1 of the secure element 10. The receiving node may use the public key of the second asymmetric key pair 52 to verify if the digital signature included in the digital certificate 72 is a valid digital signature of the contents of the digital certificate 72. If yes, the receiving node may use the copy of the public portion of the first asymmetric key pair 51 included in the digital certificate 72 to verify if the digital signature 71 is a valid digital signature of the lesser-trusted sensor value 8. If yes, the receiving node may determine the level of plausibility of the lesser-trusted sensor value 8 based on the plausibility determination parameters included in the digital certificate 72. Depending on the determined level of plausibility, the receiving node may or may not trust that the lesser-trusted sensor value 8 has substantially not been tampered with.

Note that the secure element 10 does not necessarily provide the digital signature 71 and the digital certificate 72 at the same time and may provide them independent of each other.

For example, the fourth entity 4 of the secure element 10 may provide the digital signature 71 to the sensor node (requestor) 20 whenever the sensor node 20 requests a lesser-trusted sensor value 8 to be signed.

For example, the fourth entity 4 may provide the digital certificate 72 whenever the sensor node 20 requests a digital certificate, whenever a trusted sensor value 6 is acquired by the first entity 1, whenever the acquired trusted sensor value 6 changes by more than a predetermined threshold, in regular time intervals, and the like.

Fig. 6 shows a schematic diagram of a secure element 10 and a requestor 20 according to a fourth exemplary embodiment. The fourth exemplary embodiment is based on the third exemplary embodiment and a description of common features is omitted.

Unlike the third exemplary embodiment, the secure element 10 of the fourth exemplary embodiment does not include a fourth entity (4 in Fig. 5). That is, the secure element 10 does not comprise signing functionality for creating the digital signature 71 of the lesser-trusted sensor value 8. Rather, the first entity 1 of the secure element 10 is configured to provide the private portion (private key) 511 of the first asymmetric cryptographic key pair 51 to the sensor node (requestor) 20. The sensor node 20 includes a signing unit 9 which is configured to, without validating the lesser-trusted sensor value 8, digitally sign the acquired lesser-trusted sensor value 8.

Since the lesser-trusted sensor value 8 is not compared with the trusted sensor value 6 when the signing unit 9 creates the digital signature 71, the digital signature 71 does not certify a level of plausibility of the lesser-trusted sensor value 8. Rather, it is the digital certificate 72 provided by the third entity 3 of the secure element 10 that is the cryptographic record 7 that is adapted to certify the level of plausibility, i.e., that is adapted to enable a receiving node to determine the level of plausibility of the lesser-trusted sensor value 8.

By providing the private key 511 to the sensor node (requestor) 20 and having the signing of the lesser-trusted sensor value 8 be performed by the requestor 20 rather than by the secure element 10, a processing load of the secure element 10 may be reduced and/or a performance of signing lesser-trusted sensor values 8 may be increased.

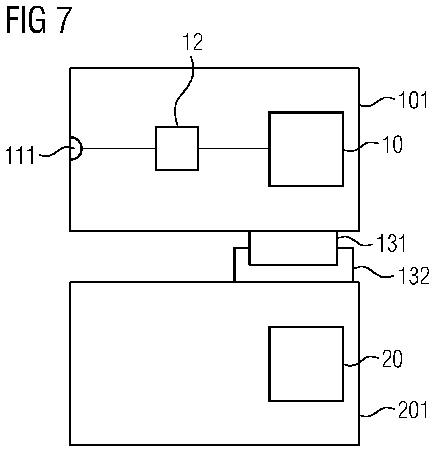

Fig. 7 shows a schematic diagram of a pluggable security module 101 according to a fifth exemplary embodiment.

The pluggable security module 101 comprises a trusted sensor port 111 connectable a trusted sensor (not shown), an analog-to-digital converter 12 and a secure element 10. The secure element 10 may be any one of the secure elements 10 of the first, second, third or fourth embodiments. The analog-to-digital converter 12 converts an analog measurement signal connected to the trusted sensor port 111 from the trusted sensor (not shown) into a trusted sensor value (not shown in Fig. 7), which is acquired by the secure element 10.

A domain comprising the trusted sensor port 11, the analog-to-digital converter 12 and the secure element 10 is encapsulated in cast resin to provide tamper protection.

The pluggable security module 101 further has a connector 131 which is pluggable into a corresponding connector 132 of an industry-standard industrial computing node 201. The industrial computing node 201 may be configured by software or hardware to provide requestor 20 functionality as discussed in the first to fourth embodiments.

The pluggable security module 101 advantageously allows upgrading an existing industrial computing node 201 with added trust according to the proposed solution.

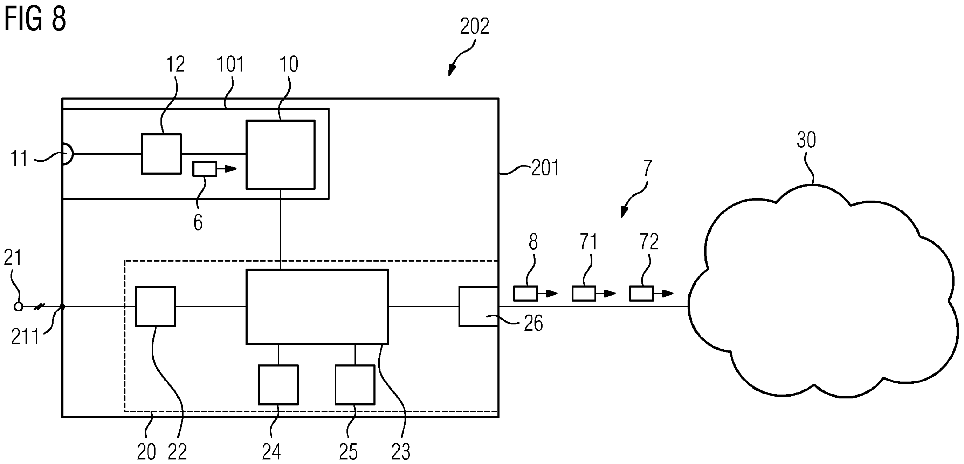

Fig. 8 shows a schematic diagram of a trusted sensor node 202 and an industrial network 30 according to a sixth exemplary embodiment.

The trusted sensor node 202 comprises an industrial sensor node 201. The industrial sensor node 201 may be embodied as a System-on-Chip having a lesser-secure domain 20 and a secure domain 101.

The secure domain 101 may also be described as an integrated security module 101 of the industrial sensor node 201. The secure domain 101 comprises an integrated trusted sensor 11, an analog-to-digital converter 12 and a secure element 10 according to any of the first to fourth embodiments.

The secure area 101 is provided with tamper protection.

Specifically, the trusted sensor 11, the analog-to-digital converter 12 and the secure element 10 may be provided with physical tamper protection, such as a resin encapsulation, a protective foil and the like.

In one variant, at least the secure element 10 may be provided with logical tamper protection. For example, a processing unit 23 of the industrial computing node 201 may be an ARM processor 23 having a TrustZone, and the secure element 10 may be embodied as software instructions executed in the TrustZone of the ARM processor 23.

The lesser-secure domain 20 comprises components such as an analog-to-digital converter 22, the processing unit 23, a volatile memory 24, and non-volatile storage 25, a lesser-trusted sensor port 211 connectable to an external sensor 21, and a network port 26 for connection with the industrial network 30.

The processing unit 23 is configured to load instructions from the non-volatile storage 25 into the volatile memory 24 and to execute the instructions loaded into the volatile memory 24. Directed by the loaded instructions being executed by the processing unit 23, the industrial computing node 201 carries out the following processing: The industrial computing node 201 acquires the lesser-trusted value 8 from the external sensor 21; requests, from the secure element 10, a cryptographic record 7 adapted to certify a level of plausibility of the lesser-trusted sensor value 8; and provides the acquired lesser-trusted sensor value 8 and the obtained cryptographic record 7 to the industrial network 30 by communicating with the industrial network 30 via the network port 26.

Herein, the cryptographic record 7 may comprise, in various variants, a digital signature 71, a digital certificate 72, or both.

Thus, the trusted sensor node 202 may provide the industrial network 10 with a sensor value, such as the lesser-trusted sensor value 8, along with the cryptographic record 7. Thereby, a level of trust of the industrial network 30 in the fact that the lesser-trusted sensor value 8 has substantially not been tampered with during any of acquisition from the sensor 21, processing by the trusted sensor node 202, and/or transmission to the industrial network 30 may be increased.

Although the present invention has been described in accordance with preferred embodiments, it is obvious for the person skilled in the art that modifications are possible in all embodiments.

### Reference Numerals:

- 1: first entity
- 2: second entity
- 3: third entity
- 4: fourth entity
- 5: cryptographic key
- 6: trusted sensor value
- 7: cryptographic record
- 8: lesser-trusted sensor value
- 9: signing unit
- 10: secure element
- 11: trusted sensor
- 12: analog-to-digital converter
- 20: requestor
- 21: sensor
- 22: analog-to-digital converter
- 23: processing unit
- 24: memory
- 25: storage
- 26: network port
- 30: industrial network
- 51: first cryptographic key
- 52: second cryptographic key
- 71: digital signature
- 72: digital certificate
- 101: security module
- 111: trusted sensor port
- 131: connector
- 132: connector
- 201: industrial computing node
- 202: trusted sensor node
- 211: lesser-trusted sensor port
- 511: private portion of first cryptographic key

## Claims

1. A secure element (10) comprising:
a first entity (1) configured to securely store a number of cryptographic keys (5);
a second entity (2) configured to acquire a trusted sensor value (6) indicative of a measurand; and
a third entity (3) configured to create, based on the acquired trusted sensor value (6), and using at least one of the number of cryptographic keys (5), a cryptographic record (7) adapted to certify a level of plausibility of a lesser-trusted sensor value (8) acquired by a requestor (20) external to the secure element (10) and indicative of the measurand, and to provide the cryptographic record (7) to the requestor (20),
**characterized in that**
the third entity (3) is configured to:
- determine, based on the trusted sensor value (6), a plurality of plausibility determination parameters enabling a determination of the level of plausibility of the lesser-trusted sensor value (8); and
- include the determined plurality of plausibility determination parameters into the cryptographic record (7),
wherein the cryptographic record (7) is a digital certificate (72) that is created by the third entity (3) using a second cryptographic key (52) of the number of cryptographic keys (5) and certifies a first cryptographic key (51) of the number of cryptographic keys (5), whereby said first cryptographic key (51) is used to create a digital signature (71) of the lesser-trusted sensor value (8).

2. The secure element of claim 1,
further comprising:
a fourth entity (4) configured to acquire, from the requestor (2), the lesser-trusted sensor value (8);
wherein the third entity (3) is configured to
- create a digital signature (71) of the lesser-trusted sensor value (8) using the first cryptographic key (51) of the number of cryptographic keys (5) and
- provide the digital signature (71) to the requestor (20).

3. The secure element of claim 1 or 2,
wherein the first entity (1) is configured to provide at least a private portion (511) of the first cryptographic key (51) to the requestor (20).

4. The secure element of any of claims 1 to 3,
wherein each of the number of cryptographic keys (5) comprises an asymmetric cryptographic key pair having a private portion and a corresponding public portion.

5. The secure element of any of claims 1 to 4,
wherein the plurality of plausibility determination parameters includes a trusted value range determined based on the acquired trusted sensor value (6) and an allowable time range based on an acquisition time of the trusted sensor value (6).

6. The secure element of any of claims 1 to 5,
wherein the secure element (10) is provided with a logical and/or a physical tamper protection.

7. A security module (101) comprising:
a secure element (10) of any of claims 1 to 6,
an internal trusted sensor (11) configured to measure the measurand to obtain a sensor reading and/or a port for connecting an external trusted sensor (11) to obtain the sensor reading from an external trusted sensor (11); and
a converter unit (12) configured to convert the obtained sensor reading into the trusted sensor value (6);
wherein an area of the security module (101) including the secure element (10), the converter unit (12) and the trusted sensor (11) and/or the port is provided with a physical tamper protection.

8. The security module of claim 7,
wherein the security module (101) is provided with a connector (131) for being pluggable into a corresponding connector (132) of an industrial computing node (201) so as to enable the industrial computing node (201) to request the cryptographic record (7) provided by the third entity (3) of the secure element (10).

9. A trusted sensor node (202) for providing a sensor value (8) within an industrial network (30), the trusted sensor node (202) comprising:
an industrial computing node (201); and
the secure element (10) of any of claims 1 to 6 and/or the security module (101) of claim 8,
wherein the industrial computing node (201) is configured to:
- acquire, from a sensor (21), the lesser-trusted sensor value (8);
- request, from the secure element (10), the cryptographic record (7) certifying the level of plausibility of the lesser-trusted sensor value (8);
- provide the acquired lesser-trusted sensor value (8) and the requested cryptographic record (7) within the industrial network (30).

10. The trusted sensor node of claim 9,
wherein the secure element (10) is embedded in a secure area of a processing unit (23) of the industrial computing node (101) .

11. A method for providing a cryptographic record (7) certifying a plausibility of a lesser-trusted sensor value (8), the method comprising using a secure element (10) for performing the steps of:
securely storing (S1) a number of cryptographic keys (5) in the secure element (10);
acquiring (S2), by the secure element (10), a trusted sensor value (6) indicative of a measurand; and
creating (S3), by the secure element (10), based on the acquired trusted sensor value (6) and using at least one of the number of cryptographic keys (5), a cryptographic record (7) adapted to certify a level of plausibility of a lesser-trusted sensor value (8), the lesser-trusted sensor value (8) being acquired by a requestor (20) external to the secure element (10) and indicative of the measurand, and to provide the cryptographic record (7) to the requestor (20),
**characterized in that**
said creating (S3) of the cryptographic record (7) comprises:
- determining, based on the trusted sensor value (6), a plurality of plausibility determination parameters enabling a determination of the level of plausibility of the lesser-trusted sensor value (8); and
- including the determined plurality of plausibility determination parameters into the cryptographic record (7),
wherein the cryptographic record (7) is a digital certificate (72) that is created by the third entity (3) using a second cryptographic key (52) of the number of cryptographic keys (5) and certifies a first cryptographic key (51) of the number of cryptographic keys (5), whereby said first cryptographic key (51) is used to create a digital signature (71) of the lesser-trusted sensor value (8).

## Patentansprüche

1. Ein sicheres Element (10), das Folgendes umfasst:
eine erste Einheit (1), die dazu konfiguriert ist, eine Anzahl von kryptografischen Schlüsseln (5) sicher zu speichern,
eine zweite Einheit (2), die dazu konfiguriert ist, einen zuverlässigen Sensorwert (6) zu erfassen, der für eine Messgröße indikativ ist,
eine dritte Einheit (3), die dazu konfiguriert ist, auf Grundlage des erfassten zuverlässigen Sensorwerts (6) und unter Verwendung von wenigstens einem der Anzahl von kryptografischen Schlüsseln (5) einen kryptografischen Datensatz (7) zu erstellen, der dazu ausgelegt ist, einen Grad an Plausibilität eines weniger zuverlässigen Sensorwerts (8), der durch einen Requestor (20) außerhalb des sicheren Elements (10) erfasst wird und für die Messgröße indikativ ist, zu zertifizieren und den kryptografischen Datensatz (7) dem Requestor (20) bereitzustellen,
**dadurch gekennzeichnet, dass**
die dritte Einheit (3) dazu konfiguriert ist:
- auf Grundlage des zuverlässigen Sensorwerts (6) eine Mehrzahl von Plausibilitätsbestimmungsparametern bereitzustellen, die eine Bestimmung des Grads an Plausibilität des weniger zuverlässigen Sensorwerts (8) ermöglichen, und
- die bestimmte Mehrzahl von Plausibilitätsbestimmungsparametern in den kryptografischen Datensatz (7) einzuschließen,
wobei der kryptografische Datensatz (7) ein digitales Zertifikat (72) ist, das durch die dritte Einheit (3) unter Verwendung eines zweiten kryptografischen Schlüssels (52) der Anzahl von kryptografischen Schlüsseln (5) erstellt wird und einen ersten kryptografischen Schlüssel (51) der Anzahl von kryptografischen Schlüsseln (5) zertifiziert, wobei der erste kryptografische Schlüssel (51) verwendet wird, um eine digitale Signatur (71) des weniger zuverlässigen Sensorwerts (8) zu erstellen.

2. Sicheres Element nach Anspruch 1,
das ferner Folgendes umfasst:
eine vierte Einheit (4), die dazu konfiguriert ist, den weniger zuverlässigen Sensorwert (8) von dem Requestor (2) zu erfassen,
wobei die dritte Einheit (3) dazu konfiguriert ist,
- unter Verwendung des ersten kryptografischen Schlüssels (51) der Anzahl von kryptografischen Schlüsseln (5) eine digitale Signatur (71) des weniger zuverlässigen Sensorwerts (8) zu erstellen und
- die digitale Signatur (71) dem Requestor (20) bereitzustellen.

3. Sicheres Element nach Anspruch 1 oder 2,
wobei die erste Einheit (1) dazu konfiguriert ist, dem Requestor (20) wenigstens einen privaten Teil (511) des ersten kryptografischen Schlüssels (51) bereitzustellen.

4. Sicheres Element nach einem der Ansprüche 1 bis 3,
wobei jeder der Anzahl von kryptografischen Schlüsseln (5) ein asymmetrisches kryptografisches Schlüsselpaar umfasst, das einen privaten Teil und einen entsprechenden öffentlichen Teil aufweist.

5. Sicheres Element nach einem der Ansprüche 1 bis 4,
wobei die Mehrzahl von Plausibilitätsbestimmungsparametern einen auf Grundlage des erfassten zuverlässigen Sensorwerts (6) und eines zulässigen Zeitbereichs, der auf einer Erfassungszeit des zuverlässigen Sensorwerts (6) basiert, bestimmten zuverlässigen Wertebereich einschließt.

6. Sicheres Element nach einem der Ansprüche 1 bis 5,
wobei das sichere Element (10) mit einem logischen und/oder einem physischen Manipulationsschutz versehen ist.

7. Sicherheitsmodul (101), das Folgendes umfasst:
ein sicheres Element (10) nach einem der Ansprüche 1 bis 6,
einen internen, zuverlässigen Sensor (11), der dazu konfiguriert ist, die Messgröße zu messen, um eine Sensorlesung erhalten, und/oder einen Anschluss zum Verbinden eines externen zuverlässigen Sensors (11), um die Sensorlesung von einem externen zuverlässigen Sensor (11) zu erhalten, und
eine Umwandlereinheit (12), die dazu konfiguriert ist, die erhaltene Sensorlesung in den zuverlässigen Sensorwert (6) umzuwandeln,
wobei ein Bereich des Sicherheitsmoduls (101) mit dem sicheren Element (10), der Umwandlereinheit (12) und dem zuverlässigen Sensor (11) und/oder dem Anschluss mit einem physischen Manipulationsschutz versehen ist.

8. Sicherheitsmodul nach Anspruch 7,
wobei das Sicherheitsmodul (101) mit einem Stecker (131) versehen ist, um in einen entsprechenden Anschluss (132) eines industriellen Rechnerknotens (201) steckbar zu sein, damit der industrielle Rechnerknoten (201) den von der dritten Einheit (3) des sicheren Elements (10) bereitgestellten kryptografischen Datensatz (7) anfordern kann.

9. Zuverlässiger Sensorknoten (202) zum Bereitstellen eines Sensorwerts (8) innerhalb eines industriellen Netzwerks (30), wobei der zuverlässige Sensorknoten (202) Folgendes umfasst:
einen industriellen Rechnerknoten (201) und
das sichere Element (10) nach einem der Ansprüche 1 bis 6 und/oder das Sicherheitsmodul (101) nach Anspruch 8,
wobei der industrielle Rechnerknoten (201) dazu konfiguriert:
- von einem Sensor (21) den weniger zuverlässigen Sensorwert (8) zu erfassen,
- von dem sicheren Element (10) den kryptografischen Datensatz (7), der den Grad an Plausibilität des weniger zuverlässigen Sensorwerts (8) zertifiziert, anzufordern,
- den erfassten weniger zuverlässigen Sensorwert (8) und den angeforderten kryptografischen Datensatz (7) innerhalb des industriellen Netzwerks (30) bereitzustellen.

10. Zuverlässiger Sensorknoten nach Anspruch 9,
wobei das sichere Element (10) in einen sicheren Bereich einer Verarbeitungseinheit (23) des industriellen Rechnerknotens (101) eingebettet ist.

11. Verfahren zur Bereitstellung eines kryptografischen Datensatzes (7), der eine Plausibilität eines weniger zuverlässigen Sensorwerts (8) zertifiziert, wobei das Verfahren die Verwendung eines sicheren Elements (10) zur Durchführung der folgenden Schritte umfasst:
sicheres Speichern (S1) einer Anzahl von kryptografischen Schlüsseln (5) in dem sicheren Element (10),
Erfassen (S2), durch das sichere Element (10), eines zuverlässigen Sensorwerts (6), der für eine Messgröße indikativ ist, und
Erstellen (S3), durch das sichere Element (10), auf Grundlage des erfassten zuverlässigen Sensorwerts (6) und unter Verwendung von wenigstens einem der Anzahl von kryptografischen Schlüsseln (5) eines kryptografischen Datensatzes (7), der dazu ausgelegt ist, einen Grad an Plausibilität eines weniger zuverlässigen Sensorwerts (8), der durch einen Requestor (20) außerhalb des sicheren Elements (10) erfasst wird und für die Messgröße indikativ ist, zu zertifizieren und den kryptografischen Datensatz (7) dem Requestor (20) bereitzustellen,
**dadurch gekennzeichnet, dass**
das Erstellen (S3) des kryptografischen Datensatzes (7) Folgendes umfasst:
- Bestimmen, auf Grundlage des zuverlässigen Sensorwerts (6), einer Mehrzahl von Plausibilitätsbestimmungsparametern, die eine Bestimmung des Grads an Plausibilität des weniger zuverlässigen Sensorwerts (8) ermöglichen, und
- Einschließen der bestimmten Mehrzahl von Plausibilitätsbestimmungsparametern in den kryptografischen Datensatz (7)
wobei der kryptografische Datensatz (7) ein digitales Zertifikat (72) ist, das durch die dritte Einheit (3) unter Verwendung eines zweiten kryptografischen Schlüssels (52) der Anzahl von kryptografischen Schlüsseln (5) erstellt wird und einen ersten kryptografischen Schlüssel (51) der Anzahl von kryptografischen Schlüsseln (5) zertifiziert, wobei der erste kryptografische Schlüssel (51) verwendet wird, um eine digitale Signatur (71) des weniger zuverlässigen Sensorwerts (8) zu erstellen.

## Revendications

1. Élément sécurisé (10) comprenant :
une première entité (1) qui est configurée pour stocker de façon sécurisée un certain nombre de clés cryptographiques (5) ;
une deuxième entité (2) qui est configurée pour acquérir une valeur de capteur fiable (6) qui est indicative d'une quantité à mesurer ; et
une troisième entité (3) qui est configurée pour créer, sur la base de la valeur de capteur fiable acquise (6), et en utilisant au moins une clé cryptographique du nombre de clés cryptographiques (5), un enregistrement cryptographique (7) qui est adapté pour certifier un niveau de vraisemblance d'une valeur de capteur moins fiable (8) qui est acquise par un interrogateur (20) qui est externe par rapport à l'élément sécurisé (10) et qui est indicative de la quantité à mesurer, et pour fournir l'enregistrement cryptographique (7) à l'interrogateur (20),
**caractérisé en ce que** :
la troisième entité (3) est configurée pour :
- déterminer, sur la base de la valeur de capteur fiable (6), une pluralité de paramètres de détermination de vraisemblance qui permettent la détermination du niveau de vraisemblance de la valeur de capteur moins fiable (8) ; et
- inclure la pluralité déterminée de paramètres de détermination de vraisemblance à l'intérieur de l'enregistrement cryptographique (7),
dans lequel l'enregistrement cryptographique (7) est un certificat numérique (72) qui est créé par la troisième entité (3) en utilisant une seconde clé cryptographique (52) du nombre de clés cryptographiques (5) et qui certifie une première clé cryptographique (51) du nombre de clés cryptographiques (5), d'où il résulte que ladite première clé cryptographique (51) est utilisée pour créer une signature numérique (71) de la valeur de capteur moins fiable (8).

2. Élément sécurisé selon la revendication 1, comprenant en outre :
une quatrième entité (4) qui est configurée pour acquérir, à partir de l'interrogateur (2), la valeur de capteur moins fiable (8) ;
dans lequel la troisième entité (3) est configurée pour :
- créer une signature numérique (71) de la valeur de capteur moins fiable (8) en utilisant la première clé cryptographique (51) du nombre de clés cryptographiques (5) ; et
- fournir la signature numérique (71) à l'interrogateur (20).

3. Élément sécurisé selon la revendication 1 ou 2, dans lequel la première entité (1) est configurée pour fournir au moins une partie privée (511) de la première clé cryptographique (51) à l'interrogateur (20).

4. Élément sécurisé selon l'une quelconque des revendications 1 à 3, dans lequel chaque clé cryptographique du nombre de clés cryptographiques (5) comprend une paire de clés cryptographiques asymétriques qui comporte une partie privée et une partie publique correspondante.

5. Élément sécurisé selon l'une quelconque des revendications 1 à 4, dans lequel la pluralité de paramètres de détermination de vraisemblance inclut une plage de valeurs fiables qui est déterminée sur la base de la valeur de capteur fiable acquise (6) et une plage temporelle autorisée qui est déterminée sur la base d'un temps d'acquisition de la valeur de capteur fiable (6).

6. Élément sécurisé selon l'une quelconque des revendications 1 à 5, dans lequel l'élément sécurisé (10) est muni d'une protection d'inviolabilité logique et/ou physique.

7. Module de sécurité (101) comprenant :
un élément sécurisé (10) selon l'une quelconque des revendications 1 à 6 ;
un capteur fiable interne (11) qui est configuré pour mesurer la quantité à mesurer pour obtenir une lecture de capteur et/ou un port pour connecter un capteur fiable externe (11) pour obtenir la lecture de capteur à partir d'un capteur fiable externe (11) ; et
une unité de convertisseur (12) qui est configurée pour convertir la lecture de capteur obtenue selon la valeur de capteur fiable (6) ;
dans lequel une zone du module de sécurité (101) qui inclut l'élément sécurisé (10), l'unité de convertisseur (12) et le capteur fiable (11) et/ou le port est munie d'une protection d'inviolabilité physique.

8. Module de sécurité selon la revendication 7, dans lequel le module de sécurité (101) est muni d'un connecteur (131) qui peut être branché à l'intérieur d'un connecteur correspondant (132) d'un nœud informatique industriel (201) de manière à permettre que le nœud informatique industriel (201) demande en requête l'enregistrement cryptographique (7) qui est fourni par la troisième entité (3) de l'élément sécurisé (10) .

9. Nœud de capteur fiable (202) pour fournir une valeur de capteur (8) à l'intérieur d'un réseau industriel (30), le nœud de capteur fiable (202) comprenant :
un nœud informatique industriel (201) ; et
l'élément sécurisé (10) selon l'une quelconque des revendications 1 à 6 et/ou le module de sécurité (101) selon la revendication 8,
dans lequel le nœud informatique industriel (201) est configuré pour :
- acquérir, à partir d'un capteur (21), la valeur de capteur moins fiable (8) ;
- demander en requête, à l'élément sécurisé (10), l'enregistrement cryptographique (7) qui certifie le niveau de vraisemblance de la valeur de capteur moins fiable (8) ; et
- fournir la valeur de capteur moins fiable acquise (8) et l'enregistrement cryptographique demandé en requête (7) à l'intérieur du réseau industriel (30).

10. Nœud de capteur fiable selon la revendication 9, dans lequel l'élément sécurisé (10) est intégré dans une zone sécurisée d'une unité de traitement (23) du nœud informatique industriel (101).

11. Procédé pour fournir un enregistrement cryptographique (7) qui certifie une vraisemblance d'une valeur de capteur moins fiable (8), le procédé comprenant l'utilisation d'un élément sécurisé (10) pour réaliser les étapes constituées par :
le stockage de façon sécurisée (S1) d'un certain nombre de clés cryptographiques (5) à l'intérieur de l'élément sécurisé (10) ;
l'acquisition (S2), par l'élément sécurisé (10), d'une valeur de capteur fiable (6) qui est indicative d'une quantité à mesurer ; et
la création (S3), par l'élément sécurisé (10), sur la base de la valeur de capteur fiable acquise (6) et en utilisant au moins une clé cryptographique du nombre de clés cryptographiques (5), d'un enregistrement cryptographique (7) qui est adapté pour certifier un niveau de vraisemblance d'une valeur de capteur moins fiable (8), la valeur de capteur moins fiable (8) étant acquise par un interrogateur (20) qui est externe par rapport à l'élément sécurisé (10) et étant indicative de la quantité à mesurer, et la fourniture de l'enregistrement cryptographique (7) à l'interrogateur (20),
**caractérisé en ce que** ladite création (S3) de l'enregistrement cryptographique (7) comprend :
- la détermination, sur la base de la valeur de capteur fiable (6), d'une pluralité de paramètres de détermination de vraisemblance qui permettent une détermination du niveau de vraisemblance de la valeur de capteur moins fiable (8) ; et
- l'inclusion de la pluralité déterminée de paramètres de détermination de vraisemblance à l'intérieur de l'enregistrement cryptographique (7),
dans lequel l'enregistrement cryptographique (7) est un certificat numérique (72) qui est créé par la troisième entité (3) en utilisant une seconde clé cryptographique (52) du nombre de clés cryptographiques (5) et qui certifie une première clé cryptographique (51) du nombre de clés cryptographiques (5), d'où il résulte que ladite première clé cryptographique (51) est utilisée pour créer une signature numérique (71) de la valeur de capteur moins fiable (8).
